# EUROPEAN PATENT APPLICATION

(11) **EP 3 643 800 A1**
(43) Date of publication of application: **29.04.2020**
(21) Application number: 19199486.2
(22) Date of filing: 25.09.2019
(51) Int. Cl.: C22C 19/05, C22C 1/04

(54) **POWDER ALLOY COMPOSITION, GAS TURBINE ENGINE COMPONENT AND METHOD FOR MANUFACTURE OF THE SAME**

(30) Priority: 25.10.2018 GB 201817361
(71) Applicant: Rolls-Royce plc, London N1 9FX (GB)
(72) Inventor: Christofidou, Katerina, Derby, Derbyshire DE24 8BJ (GB); Stone, Howard, Derby, Derbyshire DE24 8BJ (GB); Jones, Nicholas, Derby, Derbyshire DE24 8BJ (GB); Pardhi, Yogiraj, Derby, Derbyshire DE24 8BJ (GB); Jones, Colin, Derby, Derbyshire DE24 8BJ (GB)
(74) Representative: Rolls-Royce plc

(57) **Abstract**

A Ni-based superalloy powder having a freezing range of not more than 80°C is disclosed, with a composition, expressed in weight percent, of: Ni; 9-25 Co; 3-15 Cr; 0-5 Mo; 0-12 W; 3-9 Al; 0-6.5 Nb; 0.3-1 C; 0-6.5 Ta; 0-3 Ti, and incidental impurities. It is disclosed in methods for manufacturing or repair of gas turbine engine components such as gas turbine blades using additive layer manufacturing techniques.

## Description

### FIELD OF THE DISCLOSURE

The present disclosure relates to a powder alloy composition. Such a powder alloy composition is suitable for use for example as feedstock in manufacturing or repair of components using powder metallurgy route or an additive layer manufacturing process. The present disclosure also relates in some embodiments to a component of a gas turbine engine formed using the powder alloy composition, such as by an additive layer manufacturing process or a powder metallurgy process. The present disclosure also relates in some embodiments to other components formed using the powder alloy composition intended in use to be subjected to high temperature operation.

### BACKGROUND

The performance of the simple gas turbine engine cycle, whether measured in terms of efficiency or specific output is improved by increasing the turbine gas temperature. It is therefore desirable to operate the turbine at the highest possible temperature. For any engine cycle compression ratio or bypass ratio, increasing the turbine entry gas temperature will always produce more specific thrust (e.g. engine thrust per unit of air mass flow). However as turbine entry temperatures increase, it is necessary to further develop suitable materials for use in the challenging environments encountered in the gas turbine engine.

Additionally, it is desirable to enable components such as disc rotors and turbine blades in gas turbine engines, such as those in the high pressure (HP) compressor and turbine, to operate at faster shaft speeds. These properties may facilitate high climb rates that are increasingly required by commercial airlines to move aircraft more quickly to altitude, to reduce fuel burn, and to get the aircraft away from busy air spaces around airports.

Furthermore, it is desirable to improve other components intended in use to be subjected to high temperature operation. As an example, such components may be incorporated in the combustor section of a gas turbine engine. Such components require complex cooling channels to enable operating at high temperature to enhance performance and reduce emissions. Further examples of such components need not necessarily be used in a gas turbine engine, and yet still require good mechanical properties at operating temperatures in excess of 900°C.

It is known to use metallic alloys known as superalloys in the manufacture of gas turbine engine components such as turbine blades, turbine rotor disks and combustor components. Such alloys are intended for use at high temperatures, typically at temperatures of around 0.7 times their absolute melting temperature, or higher. Superalloys can be based on iron, cobalt or nickel. Ni-based superalloys are known in particular for their suitability for gas turbine engine components.

Additive layer manufacturing offers opportunities to improve performance of the gas turbine engine component through use of complex geometries in places such as cooling passages for turbine and combustor components. Additive layer manufacturing allows introduction of complex cooling channels that are otherwise not possible to produce using conventional manufacturing techniques. This complex cooling results in better and efficient use of cooling air but at the same time offers potential of reduced metal temperature. Additionally other benefits can be achieved through weight reduction by introducing material where it is required, also known as topologically optimised designs. Though intelligent design and manufacturing approach additive layer manufacturing enables increased engine performance along with opportunities to improve efficiency and reduce emissions.

Additive layer manufacturing of high temperature superalloys, however, is made challenging due to poor weldability of these alloys resulting in cracks during deposition and subsequent processing of the component. The high temperature superalloys are susceptible to cracking due to their solidification behaviour exhibiting a large (>100°C) freezing range (defined as the difference between the liquidus temperature and the solidus temperature) and very high gamma prime content. This cracking can be eliminated by reducing the high gamma prime content but this is found to result in a reduction of high temperature capability desired to increase performance.

The present disclosure is based on the inventors' insight that it would be useful to be able to manufacture or repair crack free superalloy components such as gas turbine engine components using powder based additive layer manufacturing techniques. Such techniques are advantageous in that they allow the fabrication of shapes that cannot easily, or cannot at all, be formed using alternative manufacturing processes such as casting and machining.

Highly complex shapes are sometimes suitable in order to provide cooling mechanisms for high temperature gas turbine engine components, for example.

### SUMMARY OF THE DISCLOSURE

The present disclosure provides a Ni-based superalloy powder, a method of manufacturing a component, a method of repairing a component, a component, and a gas turbine engine as set out in the appended claims.

In a first aspect, the present disclosure provides a Ni-based superalloy powder having a freezing range of not more than 80°C, the freezing range being defined as the temperature difference between the liquidus and solidus determined by differential scanning calorimetry (DSC) on cooling, the Ni-based superalloy powder having a composition, expressed in weight percent, of:

| | |
|---|---|
| Ni | balance |
| Co | 9-25 |
| Cr | 3-15 |
| Mo | 0-5 |
| W | 0-12 |
| Al | 3-9 |
| Nb | 0-6.5 |
| C | 0.3-1 |
| Ta | 0-6.5 |
| Ti | 0-3 |

and incidental impurities.

In a second aspect, the present disclosure provides a method of manufacture of a Ni-based superalloy powder according to the first aspect, the method comprising the steps of: providing a blend of elements or compounds to satisfy the nominal composition of the Ni-based superalloy powder; melting the blend to form a melt; and atomising the melt to form the Ni-based superalloy powder.

In a third aspect, the present disclosure provides a method of manufacturing a component, the method comprising the steps of: providing a Ni-based superalloy powder; and performing additive layer manufacturing by melting and solidifying the Ni-based superalloy powder to form one layer of the Ni-based superalloy powder in a predetermined shape, disposing a further layer of the Ni-based superalloy powder over said one layer and melting and solidifying said further layer of the Ni-based superalloy powder in a predetermined shape, and repeating as needed to form the component,
wherein the Ni-based superalloy powder is according to the first aspect.

In a fourth aspect, the present disclosure provides a method of repairing a component, the method comprising the steps of: providing a Ni-based superalloy powder; and performing additive layer deposition by melting and solidifying the Ni-based superalloy powder to form one layer of the Ni-based superalloy powder in a predetermined shape on a component to be repaired, disposing a further layer of the Ni-based superalloy powder over said one layer and melting and solidifying said further layer of the Ni-based superalloy powder in a predetermined shape, and repeating a suitable number of times to repair the component, wherein the Ni-based superalloy powder is according to the first aspect or the second aspect.

In a fifth aspect, the present disclosure provides a component, such as a gas turbine engine component, formed of a Ni-based superalloy by additive layer manufacturing using a powder according to the first aspect.

In a sixth aspect, the present disclosure provides a gas turbine engine for an aircraft incorporating a component according to the fifth aspect.

Optional features of the present disclosure will now be set out. These are applicable singly or in any combination with any aspect of the present disclosure.

The composition of the Ni-based superalloy powder, expressed in weight percent, may satisfy:

| | |
|---|---|
| Ni | balance |
| Co | 9.5-20.5 |
| Cr | 3.5-10.5 |
| Mo | 0-3 |
| W | 5-11 |
| Al | 3-7 |
| Nb | 3-5.5 |
| C | 0.4-0.65 |
| Ta | 0-2 |
| Ti | 0-1 |

and incidental impurities.

The Ni-based superalloy powder has a freezing range of not more than 80°C. The freezing range is defined as the temperature difference between the liquidus and solidus determined by DSC on cooling. The freezing range may be not more than 70°C, not more than 60°C, or not more than 50°C.

In the Ni-based superalloy powder, the powder has an average (d₅₀) particle size in the range 10-150 µm. Unless stated otherwise herein, particle size and particle size distribution is intended to be measured and expressed in accordance with the method and terminology prescribed in international standard ASTM B822. For example, the powder may have a particle size distribution such that d₁₀ and d₉₀ are in the range 10-150 µm. The powder may have an average (d₅₀) particle size in the range 15-45 µm. For example, the powder may have a particle size distribution such that d₁₀ and d₉₀ are in the range 15-45 µm. Alternatively, the powder may have an average (d₅₀) particle size in the range 45-110 µm. For example, the powder may have a particle size distribution such that d₁₀ and d₉₀ are in the range 45-110 µm.

In the method of manufacturing the component, the component formed by additive layer manufacturing may be subjected to a thermal treatment. This may be useful for developing the required γ' volume fraction and/or the required carbide volume fraction. Additionally or alternatively the component may be subjected to a finishing treatment, such as a machining treatment and/or a surface treatment.

The component may have a γ' volume fraction in excess of 50% by volume. For example, the γ' volume fraction may be at least 55% by volume or at least 60% by volume.

The component may have a refractory element carbide present in a volume fraction of at least 0.5% by volume. For example, the refractory element carbide may be present in a volume fraction of at least 2% by volume, at least 3% by volume, at least 4% by volume, or at least 5% by volume.

The gas turbine engine component may be a turbine guide vane. The component may for example be a turbine rotor blade. The component may for example be a combustor component.

In the gas turbine engine of the present disclosure, the engine may further comprise:
an engine core comprising a turbine, a compressor, and a core shaft connecting the turbine to the compressor;
a fan located upstream of the engine core, the fan comprising a plurality of fan blades; and
a gearbox that receives an input from the core shaft and outputs drive to the fan so as to drive the fan at a lower rotational speed than the core shaft.

Furthermore, in the gas turbine engine of the present disclosure, the turbine may be a first turbine. The compressor may be a first compressor. The core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

It is to be understood here that the gearbox used to drive the fan is different from the accessory gearbox. The expression "gearbox" used in this specification is to be understood as the gearbox used to drive the fan (unless the context demands otherwise) and the expression "accessory gearbox" used in this specification is to be understood as that used to drive the accessories.

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox is a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. A higher gear ratio may be more suited to "planetary" style gearbox. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 °C (ambient pressure 101.3 kPa, temperature 30 °C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of descent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000 m to 15000 m, for example in the range of from 10000 m to 12000 m, for example in the range of from 10400 m to 11600 m (around 38000 ft), for example in the range of from 10500 m to 11500 m, for example in the range of from 10600 m to 11400 m, for example in the range of from 10700 m (around 35000 ft) to 11300 m, for example in the range of from 10800 m to 11200 m, for example in the range of from 10900 m to 11100 m, for example on the order of 11000 m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 °C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** shows a micrograph of a 247LC sample manufactured by ALM and exhibiting a hot cracking defect;
**Figure 5** shows a process flow diagram for steps S1-S10 in an overview of a process for forming a component of an embodiment according to the present disclosure;
**Figure 6** shows a schematic flow diagram for a laser powder bed fusion (LPBF) process for use in implementing an embodiment of the disclosure;
**Figure 7** shows example images of alloy rods manufactured using arc melting and subsequently a selected surface area laser melted using representative conditions used in LPBF machine.
**Figure 8(a)** shows top surface and **Figure 8(b)** shows sectional SEM micrographs of the alloy 247LC rod of Figure 7 laser melted using parameter "Para 1" in LPBF machine as indicated in Figure 7;
**Figure 9(a)** shows top surface and **Figure 9(b)** shows sectional SEM micrographs of the Alloy 1 rod of Figure 7 laser melted using parameter "Para 1" in LPBF machine as indicated in Figure 7;
**Figure 10(a)** shows top surface and **Figure 10(b)** shows sectional SEM micrographs of the Alloy 2 rod of Figure 7 laser melted using parameter "Para 1" in LPBF machine as indicated in Figure 7;
**Figure 11** shows differential scanning calorimetry thermograms on cooling of Example Alloys 1 and 2 compared with 247LC.

### DETAILED DESCRIPTION

Aspects and embodiments of the present disclosure will now be discussed with reference to the accompanying drawings. Further aspects and embodiments will be apparent to those skilled in the art.

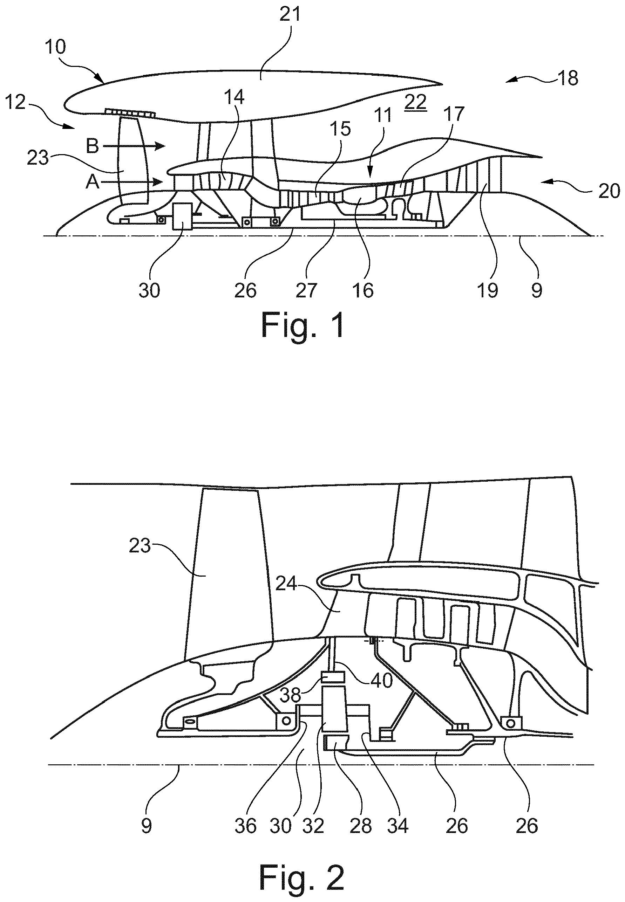

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2**. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

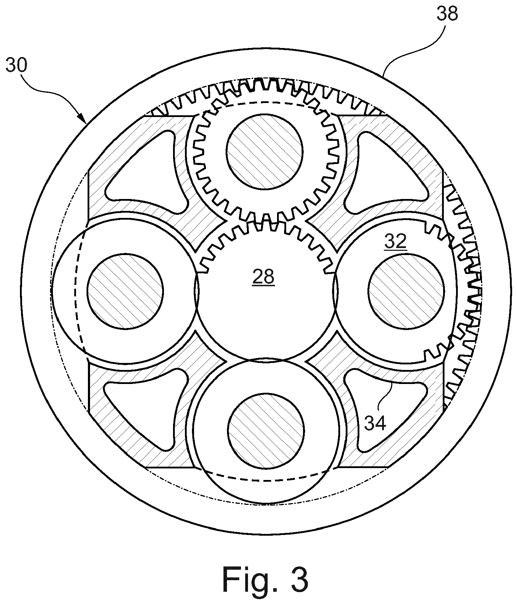

The epicyclic gearbox 30 is shown by way of example in greater detail in **Figure 3**. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).
Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

It is known to form high temperature components of the gas turbine engine, particularly those requiring high strength, from Ni-based superalloys. Taking turbine rotor blades as an example, these can be formed as single crystals or with columnar crystal or polycrystalline microstructures. Typically, the alloy is melted (e.g. using vacuum induction melting) and then cast using an investment cast process. After solidification, the component may be subject to further heat treatment steps.

A useful basic summary of Ni-based superalloys is set out at: http://www.phase-trans.msm.cam.ac.uk/2003/Superalloys/superalloys.html
Some of the relevant content of that disclosure is included here to provide basic context for the disclosure of the embodiments herein.

Ni-based superalloys usually include aluminium and/or other elements to promote the formation of gamma prime phase. This generates a two-phase equilibrium microstructure, consisting of gamma (γ) and gamma-prime (γ'). It is the γ' which is largely responsible for the elevated-temperature strength of the material and its resistance to creep deformation. The amount of γ' depends on the chemical composition and temperature.

For a given chemical composition in the composition space of interest, the fraction of γ' decreases as the temperature is increased. This phenomenon is used in order to dissolve the γ' at a sufficiently high temperature (a solution treatment) followed by ageing at a lower temperature in order to generate a uniform and fine dispersion of strengthening precipitates.

Commercial superalloys contain Ni, Al and/or Ti and various other elements. Chromium and aluminium are included for oxidation resistance. Polycrystalline superalloys contain grain boundary strengthening elements such as boron and zirconium, which segregate to the boundaries. The resulting reduction in grain boundary energy is associated with better creep strength and ductility when the mechanism of failure involves grain decohesion. Superalloys may also include carbide formers (C, Cr, Mo, W, C, Nb, Ta, Ti and Hf). Carbides tend to precipitate at grain boundaries and hence reduce the tendency for grain boundary sliding. Elements such as cobalt, iron, chromium, niobium, tantalum, molybdenum, tungsten, vanadium, titanium and aluminium are also solid-solution strengtheners, both in γ and γ'. Single crystal superalloys may include rhenium. Rhenium is a very expensive addition but leads to an improvement in the creep strength.

The properties of superalloys deteriorate if certain phases known as the topologically close-packed (TCP) phases precipitate. In these phases, some of the atoms are arranged as in nickel, where the close-packed planes are stacked in the sequence ...ABCABC.. However, although this sequence is maintained in the TCP phases, the atoms are not close-packed, hence the adjective 'topologically'. TCP phases include σ and µ. Such phases are not only intrinsically brittle but their precipitation also depletes the matrix from valuable elements which are added for different purposes. The addition of rhenium promotes TCP formation, so alloys containing these solutes should have their Cr, Co, W or Mo concentrations reduced to compensate. It is generally not practical to remove all these elements, but the chromium concentration in the new generation superalloys is much reduced. Chromium does protect against oxidation, but oxidation can also be reduced by coating the blades.

In recent years additive layer manufacturing (ALM, also known as additive manufacturing and 3D printing) has become a useful method of manufacturing such gas turbine engine components because it offers the potential of achieving levels of cooling and the intricacies of design that are typically unachievable using traditional manufacturing methods such as investment casting.

ALM involves joining or solidifying layers of material under computer control to create a three-dimensional object. Certain ALM methods often involve the use of alloys, more especially superalloys. However, these superalloy components are often brittle and are prone to cracking.

Superalloys that are suitable for use in embodiments of the present disclosure may be required to withstand temperatures in service in excess of 900°C. This need arises due to need to increase turbine entry temperature leading to increased performance of the gas turbine engine cycle, whether measured in terms of efficiency or specific output.

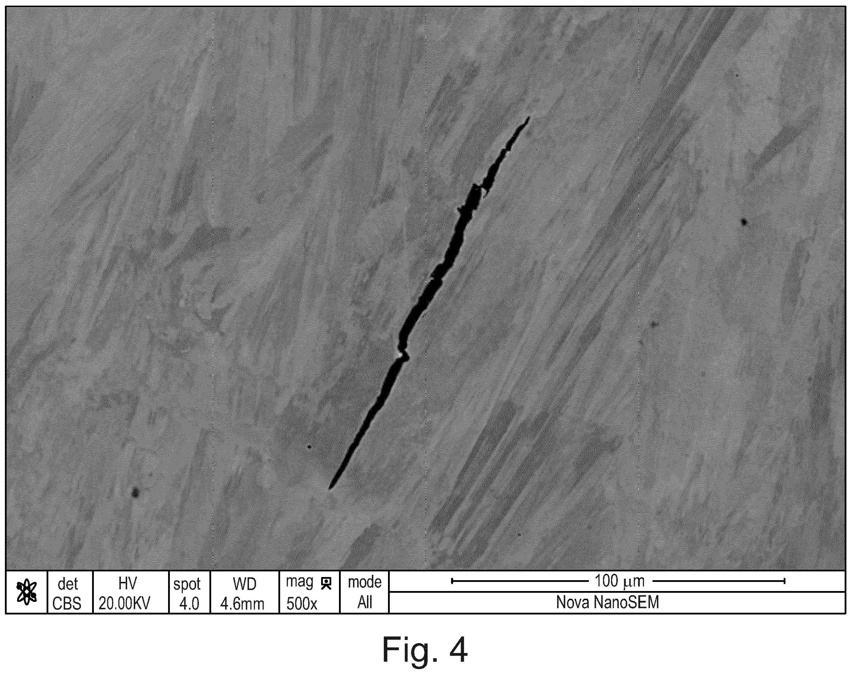

Certain Ni-based superalloys are known to withstand high temperatures but products made from them using ALM methods tend to have unacceptably high levels of solidification cracking. Solidification cracking (also known as hot cracking) is discussed at https://www.twi-global.com/technical-knowledge/faqs/faq-what-is-hot-cracking-solidification-cracking/. Such cracking occurs during solidification of molten metal. **Figure 4** shows solidification cracking in an as-deposited sample of Ni-based superalloy 247LC.

There have been some efforts in the open literature to manufacture gas turbine engine components by ALM of Ni-based superalloys. However, the components tend to have shortcomings in product quality.

For example, several efforts have been recorded in the open literature in which the manufacturing of commercially available, high temperature capable, Ni-based alloys, such as CM247LC, IN792, IN738 and CMSX-4, through ALM has been undertaken and reported. However, the alloys exhibited high levels of cracking that could not be easily mitigated. It should however be noted that alloys with low γ' fractions (and hence a lower temperature capability) have been successfully processed through ALM (for example IN718 and IN625).

Khan et al. (1980) [T. Khan, J.F. Stohr, H. Bibring, "Cotac 744: An Optimized D.S. Composite for Turbine Blades", Superalloys 1980 (Fourth International Symposium), TMS, 1980: pp. 531-540] discloses a Ni-based superalloy called Cotac 744 (γ-γ'-NbC). This material is described as a directionally solidified composite that is useful as an advanced aircraft turbine blade alloy having good creep strength. The composition of Cotac 744 is expressed as (in weight %): Ni 20 Co 4 Cr 10 W 2 Mo 6 Al 3.8 Nb 0.47 C. The melting range is disclosed as about 10°C. In view of the disclosure of directional solidification in Khan et al. (1980), there is no suggestion to use such an alloy composition (or any other alloy composition) in an ALM method generally or a powder bed additive method specifically.

United States patent US 3871835 discloses various alloy compositions, including Ni-based alloys, Co-based alloys and Fe-based alloys. These are refractory directionally solidified polyvariant fiber-reinforced alloy composites. These are subjected to directional solidification. The workpiece is formed in a rod format which is then subjected to zonal melting and solidification. The resultant microstructure includes thread-like particles of metal carbide formed parallel to the direction of solidification.

European patent application EP 2886225 A1 discloses a nickel-base superalloy powder with a high γ' precipitation content for additive manufacturing of three-dimensional articles. The powder has the following chemical composition (in weight %): 15.7-16.3 Cr, 8.0-9.0 Co, 1.5-2.0 Mo, 2.4-2.8 W, 1.5-2.0 Ta, 3.2-3.7 Al, 2.2-3.7 Ti, 0.6-1.1 Nb, 0.09-0.13 C, 0.007-0.012 B, 0.004≤Zr<0.03, 0.001≤Si<0.03, remainder Ni and unavoidable residual elements. The powder has a powder size distribution between 10 and 100 µm and a spherical morphology. The disclosure of EP 2886225 A1 is that it is control of the Si and Zr concentrations that reduces the tendency of the formation of cracks in the three-dimensional articles formed by additive manufacturing.

Cloots et al. (2016) [Cloots et al. "Investigations on the microstructure and crack formation of IN738LC samples processed by selective laser melting using Gaussian and doughnut profiles" Materials and Designs 89, (2016) pages 770-784] describes the processing of Ni-based superalloy IN738LC using selective laser melting. It notes a reduction in crack density can only be realized with increasing porosity.

Ruttert et al. (2016) [Ruttert et al. "Impact of hot isostatic pressing on microstructures of CMSX-4 Ni-base superalloy fabricated by selective electron beam melting", Materials and Designs 10 (2016), pages 720-727], discloses using selective electron beam melting (SEBM), a powder-bed-based additive manufacturing process, to produce cylindrical and columnar-grained parts of Ni-base superalloy CMSX-X from pre-alloyed and atomized powder. A high susceptibility of cracking during welding is noted.

GB 2506494 A discloses a method for ALM of a superalloy aero engine component. GB 2506494 A provides disclosure of the manner in which a powder bed of superalloy powder is located on a substrate, the powder subsequently being scanned with a laser to create a melt pool to selectively fuse the powder, in order to form a first layer of the component. The powder bed is replenished and the process repeated to form the three dimensional component layer by layer. GB 2506494 A recommends the use of a powder superalloy composition with low carbon content.

Considering EP 2886225 A1, GB 2506494 A, Cloots et al. (2016) and Ruttert et al. (2016), it can therefore be seen that several attempts have been reported in which alloys developed for manufacturing through cast processes, in some cases with minor modifications, have been used in powder-bed additive manufacturing. However, all alloys that would be suitable for service at temperatures above 900°C were shown to exhibit unacceptably high levels of cracking. Whilst some Ni-based superalloys have been successfully produced in a crack-free state through ALM, these alloys do not meet the required balance of properties for service at higher temperatures (>900°C), and are, therefore, unsuitable for some demanding applications in the combustor and turbine sections of jet engines.

Considering the disclosure of Khan et al. (1980), for example, the low-freezing-range superalloys disclosed therein were manufactured by, and were only disclosed as being suitable for manufacturing by, directional solidification casting methods. However, such methods were found to be commercially not viable because the solidification rates required were slower than existing processes. To the knowledge of the present inventors, this was the reason why further research into these alloys ceased in the 1980s.

The present inventors consider that additive layer manufacturing (ALM) is useful in manufacturing aero engine combustor and turbine components in order to achieve the desired level of cooling and the intricacies of the design, at least some of which cannot be achieved with traditional manufacturing methods. However, the Ni-based superalloys capable of withstanding operating temperatures in excess of 900°C traditionally comprise a high fraction of the strengthening γ' precipitates (> 60% by volume) and have been shown to be particularly difficult to produce through additive methods due to the presence of an unacceptably high freezing range that leads to solidification cracking.

Suitable ALM techniques for use with superalloys include laser powder bed fusion or electron beam melting. Thin layers of powder are melted using a laser or electron beam and solidified to fuse scans of sliced Computer Aided Design (CAD) data to create the required geometry. A re-coater mechanism is used to lay down the powder on top of each scanned area, allowing the user to build up the required shape of the component layer by layer.

In general terms, the present disclosure is of a range of powder alloys with a narrow freezing range, more specifically γ-γ'-MC Ni-based alloys, for use with ALM methods. These alloys provide a smaller freezing range than is typical for conventional Ni-based superalloys. This allows the reduction or suppression in formation of cracks in the components. The alloys may comprise a γ' fraction higher than 50%, and exhibit good creep and oxidation resistance through the formation of an alumina scale.

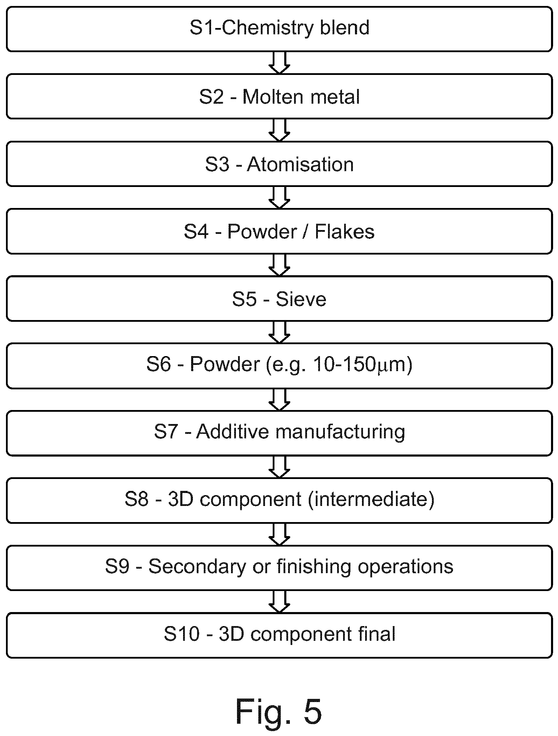

A component formed of a Ni-based superalloy with a narrow freezing range (<80°C) can be manufactured additively using a process shown schematically in **Figure 5**.

In Step S1, the required proportions of chemical elements are combined and blended by weighing individual element to desired quantity. Embodiments of suitable alloy compositions are set out below. Individual elements may be supplied in alloyed or pure elemental form or as a compound. As an example, Chromium Carbide is added to achieve small quantity of desired Carbon and remaining Cr is added in elemental form.

In step S2 this blend is then melted using a suitable method such as electrode induction heating. Other melting techniques can be used.

The molten metal is then atomised (step S3) by pouring through a tundish using a suitable method such as plasma atomisation (PA), plasma rotating electrode process (PREP), rotating electrode process (REP) or electrode induction melting inert gas atomisation (EIGA). Other methods are also suitable, such as water atomisation, gas atomisation, vacuum atomisation, centrifugal atomisation, rotating disc atomisation and ultrasonic atomisation. For EIGA, the inert gas used is Argon but is not limited to this. A high pressure fluid jet of molten metal is broken in to very fine droplets, which then solidify into powder (or flakes) of a given particle size distribution (step S4).

The powder (this term is used to include any particulate form, whether flakes, spherical particles or other particulate morphology) is then blended, if required, to homogenise the powder characteristics and sieved (step S5) in to a desired powder particle size range (step S6) e.g. 10-150 µm or 15-45 µm or 45-110 µm.

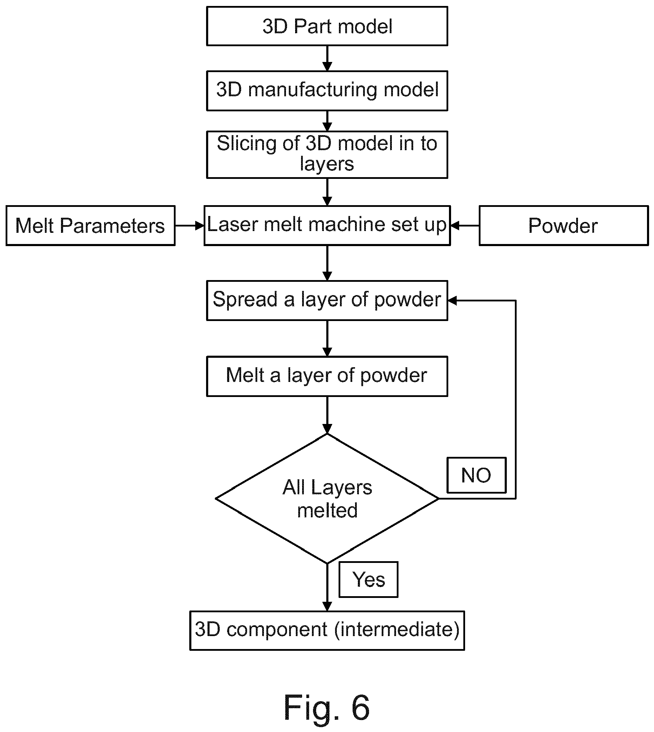

This powder is then used to manufacture or repair a component using an additive manufacturing method (step S7) such as laser powder bed fusion (LPBF) or electron beam melting (EBM). Other methods of additive manufacturing may be used, such as direct energy deposition where the powder disclosed herein is used as feedstock. **Figure 6** shows a schematic flow diagram for a LPBF process for use in implementing an embodiment of the disclosure. It is to be recognised that other methods of additive manufacturing than LPBF may be used. However, with reference to Figure 6, a CAD model of the required component shape is generated. An intermediate manufacturing model may be generated from the component CAD model. The manufacturing model may include considerations for machining stock, distortion caused during deposition and support structures to aid building of part. This model is then "sliced" into layers suitable for layer-by layer ALM. The LPBF process is set up according to the required melt parameters (e.g. beam power, beam speed, beam spacing, layer thickness, and scanning pattern) and the characteristics of the powder feedstock generated in steps S1-S6 of Figure 5. A layer of powder is spread at an appropriate location and then melted and solidified in accordance with the slice of the CAD model to be manufactured. This sub-process is repeated until all the layers of the CAD model have been formed. At the end of the process illustrated in Figure 6, the intermediate component of step S8 in Figure 5 has been formed.

The component at step S8 in Figure 5 is referred to as an intermediate component because it may be subjected to further processing such as thermal treatment or subsequent machining or other finishing operations (step S9) to produce a final product (step S10).

A useful feature of the present disclosure is that the compositional space provided for the alloy allows a wide heat treatment window to enable a robust regime without having very tight (typically expensive) control on temperature during thermal treatment process.

The compositions useful in the present disclosure satisfy the following proportion ranges for the elements, in weight percent:

| | |
|---|---|
| Ni | balance |
| Co | 9-25 |
| Cr | 3-15 |
| Mo | 0-5 |
| W | 0-12 |
| Al | 3-9 |
| Nb | 0-6.5 |
| C | 0.3-1 |
| Ta | 0-6.5 |
| Ti | 0-3 |

incidental impurities.

Further restricted ranges for the elements present in the compositions are shown below, in weight percent:

| | |
|---|---|
| Ni | balance |
| Co | 9.5-20.5 |
| Cr | 3.5-10.5 |
| Mo | 0-3 |
| W | 5-11 |
| Al | 3-7 |
| Nb | 3-5.5 |
| C | 0.4-0.65 |
| Ta | 0-2 |
| Ti | 0-1 |

incidental impurities.

Two example alloys were produced and their compositions are shown in Table 1 in weight percent.

**Table 1 - Nominal compositions of Example Alloys 1 and 2**

| **Element** | **Example Alloy 1 (nominal - wt%)** | **Example Alloy 2 (nominal - wt%)** |
|---|---|---|
| Ni | Balance | Balance |
| Co | 10 | 20 |
| Cr | 4 | 10 |
| Mo | 2 | - |
| W | 10 | 10 |
| Al | 6 | 4 |
| Nb | 3.8 | 4.9 |
| C | 0.47 | 0.6 |
| Ta | - | - |
| Ti | - | - |

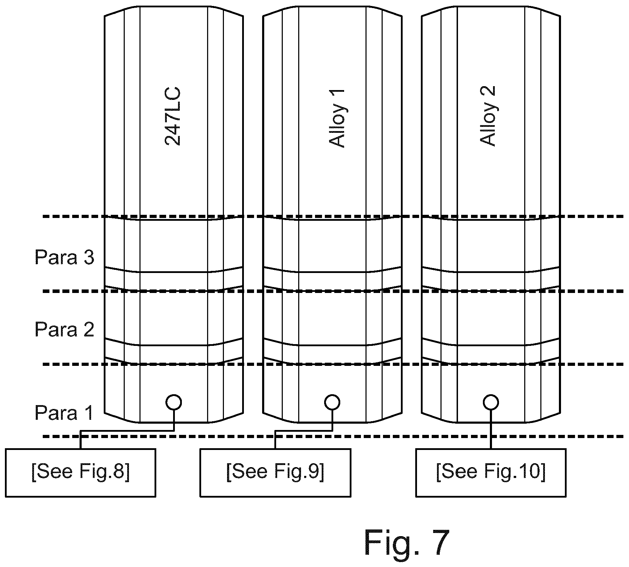

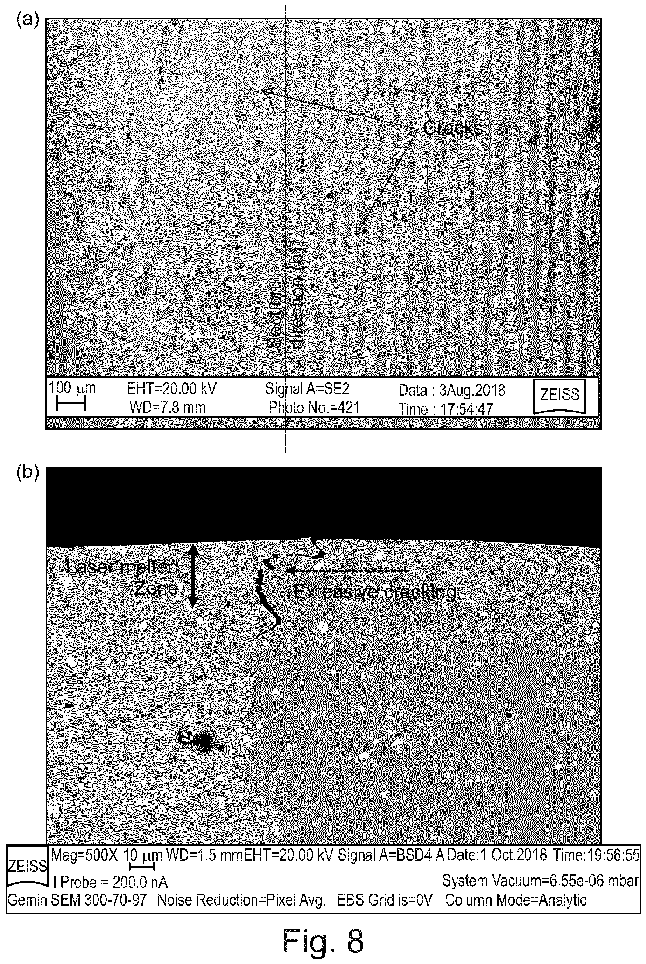

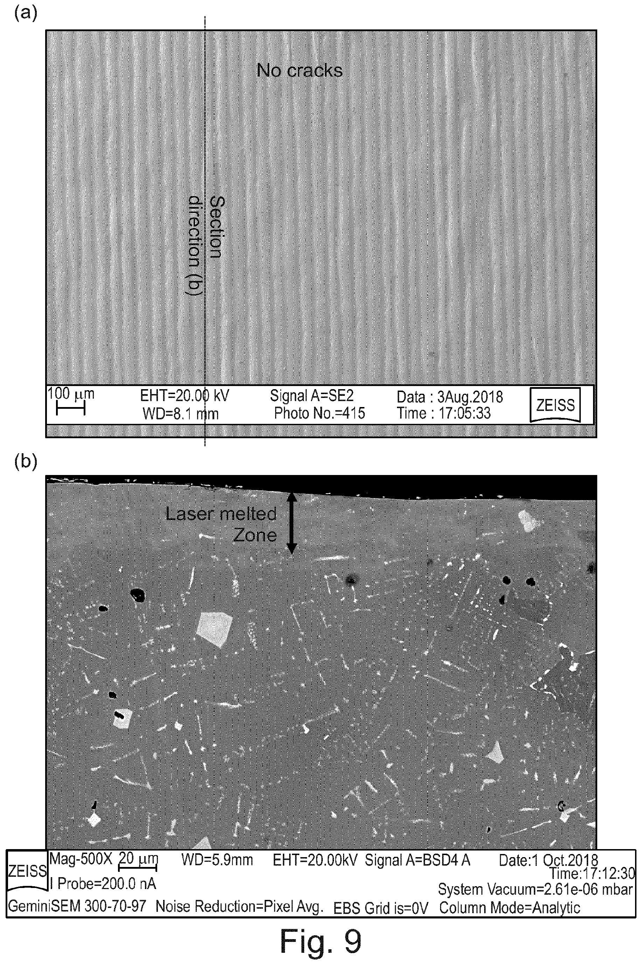

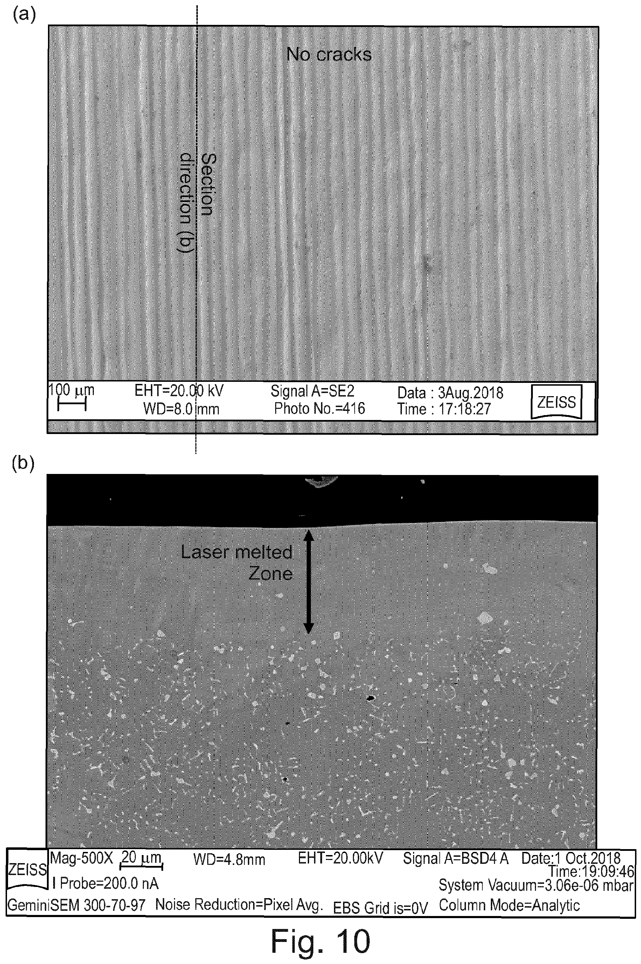

**Figure 7** shows example images of alloy rods manufactured using arc melting. These alloy rods were then ground to produce flat surface and 5 mm stripes were laser melted using three representative conditions (Para 1, Para 2 and Para 3) in a LPBF machine. Using this methodology the heating and cooling conditions experienced during LPBF were simulated to test susceptibility to solidification cracking for the disclosed alloys. For comparison, 247LC was used (left hand rod). Example Alloy 1 is shown in the centre and Example Alloy 2 is the right hand rod. On the ground surface of each alloy rod a 5 mm stripe was laser melted using three representative laser melt parameters called Para 1, Para 2 and Para 3 in a LPBF machine. A comparison of SEM micrographs of the samples produced using Para 1 are shown in Figures 8, 9, 10, as indicated on Figure 7. Images (a) and (b) in Figures 8, 9 and 10 show top surface view and a sectional view, respectively. These alloy rods were manufactured and laser melted in order to assess the compositions' susceptibility to cracking during laser melts. As shown in **Figure 8**, 247LC (having a wide freezing range) cracks significantly. Example Alloys 1 and 2 show no cracking (**Figures 9** **and** **10**, respectively). Note that the melt parameters used were intentionally chosen to favour cracking, indicating that even with such parameters, Example Alloys 1 and 2 show useful behaviour particularly suited to ALM manufacturing techniques.

It is considered that the risk of solidification cracking can be reduced by controlling the freezing range of the material via modifications to the alloy chemistry (i.e. the elemental proportions of the components of the alloy). The freezing range of the material is defined as the difference between the liquidus and solidus temperature. The freezing ranges of typical high temperature Ni-based superalloys usually exceed 80°C. In the present disclosure, it is useful to operate with compositions having freezing ranges below 80°C.

The liquidus and solidus temperatures can be measured using Differential Scanning Calorimetry (DSC). To generate DSC data, heating and cooling rates of 10°C/min for measurements are suitably used.

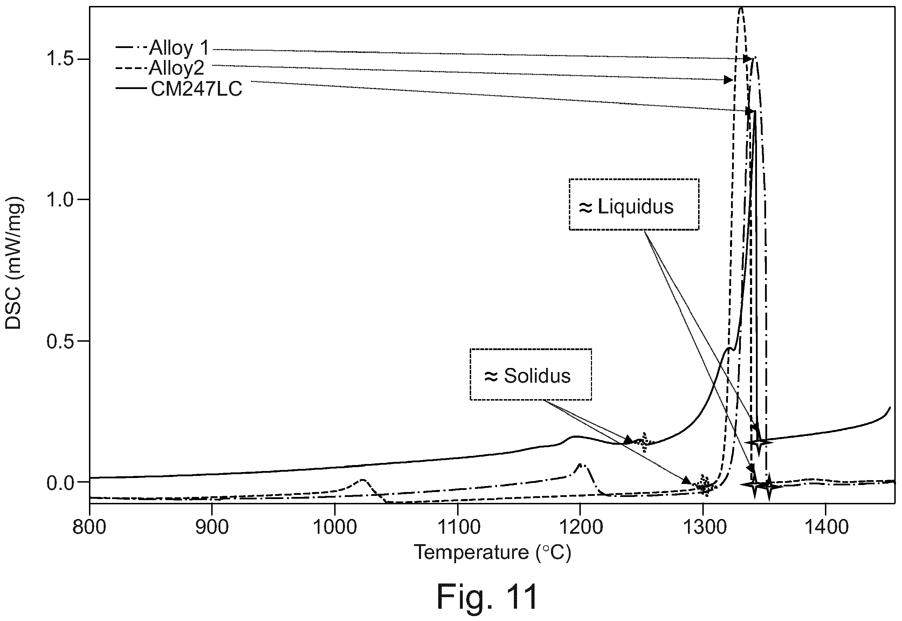

By way of example, differential scanning calorimetry thermograms obtained on cooling are provided in **Figure 11** for the compositions used in Figure 7. The approximate positions of solidus and liquidus temperatures are also noted on the thermograms. Note that the samples were tested in their as-arc melted form. The freezing range of the Example Alloys 1 and 2 (see Table 1 for compositions) is compared against the freezing range of 247LC. Both Example Alloys 1 and 2 show a much reduced freezing range in comparison to 247LC, of about 50°C.

The DSC thermograms also show a wider gap between solidus and γ' solvus temperature for disclosed alloys. Having a wider window between solidus and γ' solvus is of use additionally in that an adequate heat treatment window can be provided in which the material may be solutioned without the risk of incipient melting. Figure 11 also illustrates the suitability of Example Alloys 1 and 2 in which a heat treatment window upwards of about 100°C and about 300°C is identified between the large solidification peak (>1300°C) and the γ' formation peaks at about 1200°C and 1050°C, respectively.

It is considered that alloys according to the present disclosure can provide a useful balance of mechanical properties and environmental resistance suitable for operation at temperatures above 900°C for prolonged periods of time. Typically, a γ' volume fraction in excess of 50% is suitable. In addition, there may be at least about 0.5% volume fraction of refractory element carbides The deterioration of the microstructure towards the formation of topologically close-packed phases (TCP) is undesirable.

As will be understood, the embodiments described herein are readily adaptable to the repair of components. The additive manufacturing process can be carried out as an additive repair process, using a component to be repaired as a substrate on which to carry out the additive repair process.

In summary, this disclosure provides superalloys for the production of substantially crack-free components capable of withstanding operating temperatures in excess of 900°C produced through powder based additive manufacturing methods. The reduction in the risk of solidification cracking is achievable in part by providing a freezing range that is narrower than 80°C, in contrast to most commercially available superalloys for withstanding operating temperatures in excess of 900°C. In addition, the superalloys have a useful balance of mechanical properties, environmental resistance and microstructural stability for long duration high temperature service. The manufacturing limitations discussed above for certain prior art alloys are also addressed by the present disclosure by the demonstration here that powder based additive manufacturing methods are commercially viable methods of manufacture for the disclosed compositions.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the disclosure has been described in conjunction with the exemplary embodiments described above, many equivalent modifications and variations will be apparent to those skilled in the art when given this disclosure. Accordingly, the exemplary embodiments of the disclosure set forth above are considered to be illustrative and not limiting. Various changes to the described embodiments may be made without departing from the scope of the invention as defiled by the claims.

For the avoidance of any doubt, any theoretical explanations provided herein are provided for the purposes of improving the understanding of a reader. The inventors do not wish to be bound by any of these theoretical explanations.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A Ni-based superalloy powder having a freezing range of not more than 80°C, the freezing range being defined as the temperature difference between the liquidus and solidus determined by differential scanning calorimetry (DSC) on cooling, the powder having a composition, expressed in weight percent, of:
| | |
|---|---|
| Ni | balance |
| Co | 9-25 |
| Cr | 3-15 |
| Mo | 0-5 |
| W | 0-12 |
| Al | 3-9 |
| Nb | 0-6.5 |
| C | 0.3-1 |
| Ta | 0-6.5 |
| Ti | 0-3 |
and incidental impurities.

2. The Ni-based superalloy powder of claim 1, wherein the powder has a composition, expressed in weight percent, of:
| | |
|---|---|
| Ni | balance |
| Co | 9.5-20.5 |
| Cr | 3.5-10.5 |
| Mo | 0-3 |
| W | 5-11 |
| Al | 3-7 |
| Nb | 3-5.5 |
| C | 0.4-0.65 |
| Ta | 0-2 |
| Ti | 0-1 |
and incidental impurities.

3. The Ni-based superalloy powder of claim 1 or 2, wherein the powder has an average (d₅₀) particle size in the range 10-150 µm.

4. The Ni-based superalloy powder of claim 1 or 2, wherein the powder has a particle size distribution such that d₁₀ and d₉₀ are in the range 10-150 µm.

5. The Ni-based superalloy powder of claim 1 or 2, wherein the powder has an average (d₅₀) particle size in the range 15-45 µm.

6. The Ni-based superalloy powder of claim 1 or 2, wherein the powder has a particle size distribution such that d₁₀ and d₉₀ are in the range 15-45 µm.

7. The Ni-based superalloy powder of claim 1 or 2, wherein the powder has an average (d₅₀) particle size in the range 45-110 µm.

8. The Ni-based superalloy powder of claim 1 or 2, wherein the powder has a particle size distribution such that d₁₀ and d₉₀ are in the range 45-110 µm.

9. A method of manufacturing a component, the method comprising the steps of:
providing a Ni-based superalloy powder; and
performing additive layer manufacturing by melting and solidifying the Ni-based superalloy powder to form one layer of the Ni-based superalloy powder in a predetermined shape, disposing a further layer of the Ni-based superalloy powder over said one layer and melting and solidifying said further layer of the Ni-based superalloy powder in a predetermined shape, and repeating as needed to form the component,
wherein the Ni-based superalloy powder is according to any one of claims 1 to 8.

10. A method of repairing a component, the method comprising the steps of:
providing a Ni-based superalloy powder; and
performing additive layer deposition by melting and solidifying the Ni-based superalloy powder to form one layer of the Ni-based superalloy powder in a predetermined shape on a component to be repaired, disposing a further layer of the Ni-based superalloy powder over said one layer and melting and solidifying said further layer of the Ni-based superalloy powder in a predetermined shape, and repeating a suitable number of times to repair the component,
wherein the Ni-based superalloy powder is according to any one of claims 1 to 8.

11. A component formed of a Ni-based superalloy by additive layer manufacturing using a Ni-based superalloy powder according to any one of claims 1 to 8.

12. The component of claim 11, wherein the component has a γ' volume fraction in excess of 50% by volume.

13. The component of claim 11 or 12, wherein the component has a refractory element carbide present in a volume fraction of at least 0.5 % by volume.

14. The component of any one of claims 11 to 13, wherein the component is a turbine blade, vane or a component of a combustor of a gas turbine engine.

15. A gas turbine engine (10) for an aircraft incorporating a component according to any one of claims 11 to 14.
